Europäisches Patentamt

European Patent Office

Office européen des brevets

(11) Veröffentlichungsnummer: **0 419 925 A1**

## (12) EUROPÄISCHE PATENTANMELDUNG

(21) Anmeldenummer: 90117445.8

(22) Anmeldetag: 11.09.90

(51) Int. Cl.⁵: **B62D 7/15**

(30) Priorität: 23.09.89 DE 3931847

(43) Veröffentlichungstag der Anmeldung:
**03.04.91 Patentblatt 91/14**

(84) Benannte Vertragsstaaten:
**DE ES FR IT SE**

(71) Anmelder: **ROBERT BOSCH GMBH**
**Postfach 10 60 50**
**W-7000 Stuttgart 10(DE)**

(72) Erfinder: **Ahner, Peter, Dipl.-Ing.**
**Wiesenstrasse 25**
**W-7140 Ludwigsburg-Ossweil(DE)**
Erfinder: **Schieber, Dieter, Dipl.-Ing. (FH)**
**Lerchenstrasse 28**
**W-7101 Untereisesheim(DE)**
Erfinder: **Schustek, Siegfried, Dr. Ing.**
**Groeninger Strasse 48**
**W-7257 Ditzingen(DE)**

(54) **Elektromotorische Verstellvorrichtung.**

(57) Bei einer elektromotorischen Verstellvorrichtung, insbesondere zum Verstellen der Hinterräder eines Kraftfahrzeugs, ist zur Erzielung ausreichend großer Dynamik und Verstellkraft mit kleinem Elektromotor bei akzeptabler Bordnetzbelastung zwischen Elektromotor und dem Verstellorgan, insbesondere den Hinterrädern, ein Geradschubkurbeltrieb (12) mit Antriebsstange (11) für das Verstellorgan, mit vom Elektromotor (13) angetriebener Kurbel (22) und mit an Kurbel (22) und Antriebsstange (11) angelenktem Pleuel (20) angeordnet. Der Gelenkpunkt (24) zwischen Pleuel (20) und Antriebsstange (11) liegt in der Längsachse (26) der Antriebsstange (11), während der Drehpunkt (21) der Kurbel (22) im Querabstand zur Längsachse (26) versetzt ist. Zur Verschiebung der Antriebsstange (11) wird nur derjenige Drehbereich der Kurbel (22) genutzt, in dem der Gelenkpunkt (25) zwischen Pleuel (20) und Kurbel (22) auf der von dem Kurbeldrehpunkt (21) abgekehrten Seite der Längsachse (26) liegt. Zwischen Elektromotor (13) und Kurbel (22) ist ein Untersetzungsgetriebe (30) ohne Selbsthemmung eingeschaltet.

Fig. 2

## ELEKTROMOTORISCHE VERSTELLVORRICHTUNG

Stand der Technik

Die Erfindung geht aus von einer elektromotorischen Verstellvorrichtung, insbesondere zum Verstellen der Hinterräder eines Kraftfahrzeugs.

Mit solchen Verstellvorrichtungen für die Hinterradlenkung von Kraftfahrzeugen, vorzugsweise Pkw, werden die Hinterräder in Abhängigkeit vom Lenkungseinschlag der Vorderräder angesteuert, wodurch im Bereich kleiner Geschwindigkeiten der Wendekreis des Kraftfahrzeugs reduziert und bei hohen Geschwindigkeiten die Richtungsstabilität, insbesondere beim Fahrspurwechsel deutlich erhöht wird. Bekannte Verstellvorrichtungen für die Hinterradlenkung arbeiten mechanisch oder elektrohydraulisch.

Vorteile der Erfindung

Die erfindungsgemäße elektromotorische Verstellvorrichtung mit den kennzeichnenden Merkmalen des Anspruchs 1 hat den Vorteil, daß infolge der exzentrischen, außermittigen Anordnung von Pleuelgelenkpunkt an der Antriebsstange und Kurbeldrehpunkt zueinander und infolge des sehr trägheitsmomentarmen Untersetzungsgetriebe die geforderte Dynamik und Verstellkraft zum Verstellen der Hinterräder von einem Elektromotor aufgebracht werden kann. Bei vorgegebener Kraft- und Dynamikanforderung ergibt sich damit eine akzeptable Bordnetzbelastung des Fahrzeugs. Dies liegt insbesondere darin begründet, daß durch die konstruktive Gestaltung, die auf die Antriebsstange wirkende Pleuelnormalkraft, die rechtwinklig zur Verschieberichtung der Antriebsstange wirkt, verringert und der lineare Bereich des Verstellhubs selbst mit einem kleinen Kurbelradius erzielt werden kann. Die kleinere Pleuelnormalkraft führt zu geringen Reibkräften in der Gleitlagerung der Antriebsstange. Der kleinere Kurbelradius bewirkt eine große Untersetzung im Kurbeltrieb, so daß das Flankenspiel der davor liegenden Getriebestufe vernachlässigbar klein wird und auch ein kleineres Motormoment erforderlich ist. Die Auswirkungen des vom Getriebe herrührenden Spiels auf das Axialspiel die der Antriebsstange sind weitgehend eliminiert, was für das Fahrverhalten des Kraftfahrzeugs von wesentlichem Vorteil ist.

Durch elektromotorische Betätigung der Antriebsstange ergibt sich weiterhin die Möglichkeit der Beeinflussung der Verstellung der Hinterräder mittels einer übergeordneten Elektronik durch weitere Größen, wie Fahrzeuggeschwindigkeit, Seitenwind, Motorsteuerung etc. Dadurch kann das Fahrverhalten des Fahrzeugs wesentlich verbessert werden.

Durch die in den weiteren Ansprüchen aufgeführten Maßnahmen sind vorteilhafte Weiterbildungen und Verbesserungen der im Anspruch 1 angegebenen elektromotorischen Verstelleinrichtung möglich.

Um bei Fahrzeugen die Bordnetzbelastung weiter zu reduzieren, wird gemäß einer bevorzugten Ausführungsform der Erfindung mit Rücksicht auf den Wirkungsgrad ein Getriebe ohne Selbsthemmung verwendet und eine zusätzliche Arretiervorrichtung für die Antriebsstange vorgesehen, die im Störungsfall in der Verstelleinrichtung einer Verschiebung der Antriebsstange unter äußerer, z.B. über die Hinterräder eingeleiteter Krafteinwirkung verhindert.

Verschiedene Ausführungsformen einer Arretiervorrichtung sind in den weiteren Ansprüchen angegeben, wobei alle Ausführungsformen den Vorteil haben, daß die Arretiervorrichtung direkt an der Antriebsstange angreift und so zusätzliche Fehlermöglichkeiten, die zwischen Elektromotor und Antriebsstange auftreten können, ausgeschlossen sind. Im Störungsfall ist es zweckmäßig, den Fahrer durch eine Anzeige über das erfolgte Ansprechen der Arretiervorrichtung zu informieren. Das Fahrzeug kann bis zum nächsten Werkstattbesuch gefahrlos weiter betrieben werden. Lediglich das Fahrverhalten des Fahrzeugs ist aufgrund der durch die Arretiervorrichtung passivierten Lenkung der Hinterräder, wie bei einem ausschließlich vorderradgelenkten Fahrzeug.

Zeichnung

Die Erfindung ist anhand von in der Zeichnung dargestellten Ausführungsbeispielen in der nachfolgenden Beschreibung näher erläutert. Es zeigen:
Fig. 1 einen Längsschnitt einer elektromotorischen Verstellvorrichtung zum Verstellen der Hinterräder eines Kraftfahrzeugs,
Fig. 2 eine Draufsicht der Verstellvorrichtung in Fig. 1 bei fehlendem Elektromotor und nur angedeutetem Gehäuse,
Fig. 3 einen Längsschnitt der Verstellvorrichtung gemäß einem weiteren Ausführungsbeispiel,
Fig. 4 eine Draufsicht einer Arretiervorrichtung in der Verstellvorrichtung in Fig. 1 und 2, ausschnittweise,
Fig. 5 einen Schnitt längs der Linie V-V in Fig. 4,
Fig. 6 eine vergrößerte Darstellung des Ausschnitts VI in Fig. 5,

Fig. 7 bis 12 jeweils eine schematisierte Seitenansicht einer Arretiervorrichtung für die Verstellvorrichtung in Fig. 1 und 2 gemäß weiterer Ausführungsbeispiele, ausschnittweise.

Beschreibung der Ausführungsbeispiele

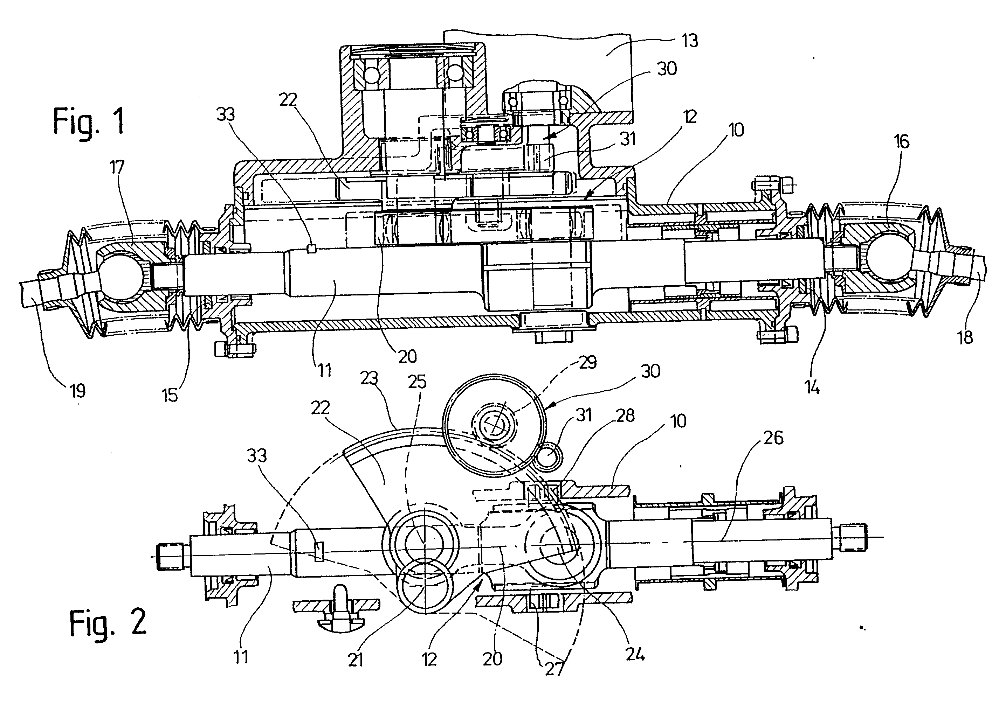

Die in Fig. 1 im Längsschnitt und in Fig. 2 in teilweiser Draufsicht zu sehende elektromotorische Verstellvorrichtung zum Verstellen der Hinterräder eines Personenkraftwagens (Pkw) als Beispiel eines Kraftfahrzeugs weist eine in einem Gehäuse 10 axial verschiebbar gelagerte Antriebsstange 11 als abtriebseitigen Teil eines Geradschubkurbeltriebs 12 und einen in diesen eintreibenden Elektromotor 13 auf. Die Verschiebebewegung der Antriebsstange 11, die durch Tellerfedern 14,15 in beiden Verschieberichtungen begrenzt ist, wird über an den Enden der Antriebsstange 11 angeordnete Gelenkköpfe 16,17 auf Spurstangen 18,19 übertragen, die ihrerseits an den hier nicht dargestellten Hinterrädern angreifen und einen entsprechenden Lenkwinkel der Hinterräder bewirken.

Der Geradschubkurbeltrieb 12 umfaßt ferner einen Pleuel 20, und eine um einen Drehpunkt 21 schwenkbare segmentförmige Kurbelscheibe 22 mit Außenverzahnung 23. Der Pleuel 20 ist endseitig im Gelenkpunkt 24 an der Antriebsstange 11 und im Gelenkpunkt 25 an der Kurbelscheibe 22 angelenkt. Dabei liegt der Gelenkpunkt 24 auf der Längsachse 26 der Antriebsstange 11, während der Drehpunkt 21 im Querabstand von der Längsachse 26 angeordnet ist. Im Bereich des Gelenkpunktes 24 ist die Antriebsstange 11 durch federbelastete Gleitsteine 27,28 seitlich geführt, so daß eine Auslenkung der Antriebsstange 11 durch die Pleuelnormalkraft, die quer zur Verschieberichtung der Antriebsstange 11 wirkt, verhindert ist. Mit der Außenverzahnung 23 kämmt das Abtriebsrad 29 eines Untersetzungsgetriebes 30, das hier als Stirnradgetriebe ausgebildet ist, dessen Eintriebsrad 31 drehfest auf der Abtriebswelle des Elektromotors 13 sitzt. Das Untersetzungsgetriebe 30 ist zweistufig ausgebildet. Mit Drehen des reversiblen Elektromotors 13 wird die Kurbelscheibe 22 aus der in Fig. 2 ausgezogen dargestellten Mittellage in die eine oder andere Schwenkrichtung bis in die strichliniert dargestellten Endpositionen geschwenkt. Dabei wird lediglich derjenige Drehbereich der Kurbelscheibe 22 für die Antriebsbewegung der Antriebsstange 11 genutzt, in dem der Gelenkpunkt 25 zwischen Pleuel 20 und Kurbelscheibe 22 auf der von dem Kurbeldrehpunkt 21 abgekehrten Seite der Längsachse 26 liegt. Die Ansteuerung des Elektromotors 13 erfolgt abhängig vom Lenkungseinschlag an den Vorderrädern des Fahrzeugs. Durch eine übergeordnete Elektronik können weitere Größen in die Ansteuerung mit einbezogen werden, wie Fahrzeuggeschwindigkeit oder Seitenwind.

Das Untersetzungsgetriebe 30 weist keine Selbsthemmung auf. Deshalb muß dafür Sorge getragen werden, daß im Störungsfall der Verstellvorrichtung, z.B. durch Ausfall des Bordnetzes, des Elektromotors oder der Steuerelektronik, von außen über die Hinterräder wirkende Verschiebekräfte keine Verschiebung der Antriebsstange 11 bewirken, was zu einem instabilen Lenkungsverhalten des Fahrzeugs führen würde. Aus diesem Grund ist eine Arretiervorrichtung 32 vorgesehen, die unmittelbar an der Antriebsstange 11 angreift und ausschließlich im Störungsfall aktiviert wird.

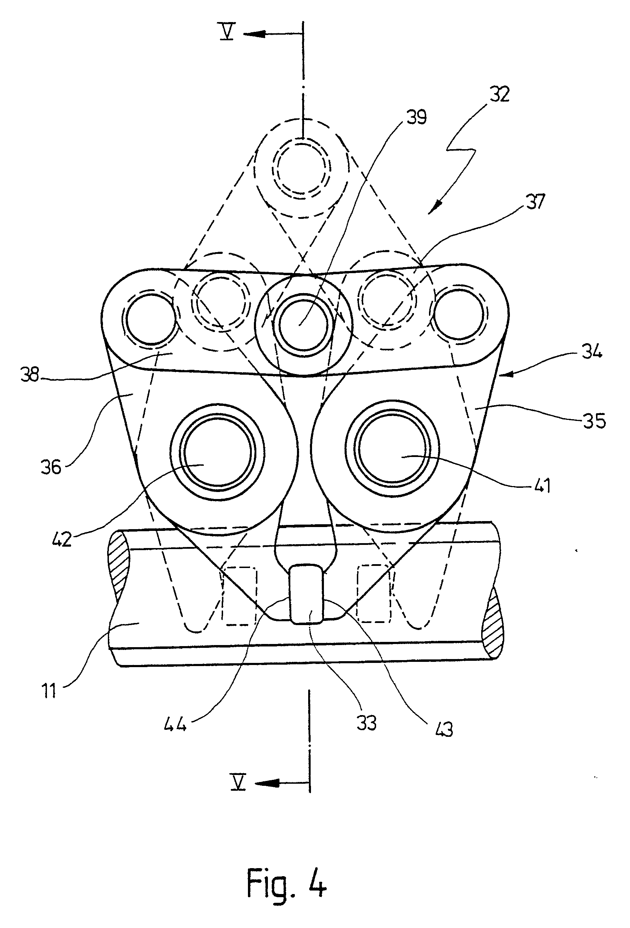

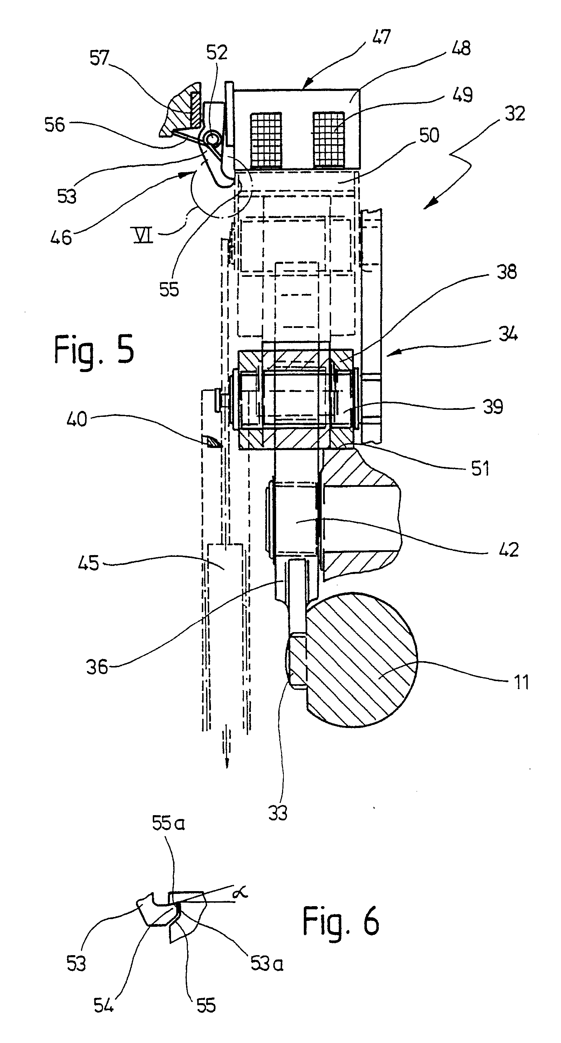

Der Übersichtlichkeit halber ist auf die Darstellung der Arretiervorrichtung 32 in Fig. 1 und 2 verzichtet worden. Lediglich der Angriffspunkt der Arretiervorrichtung 32, der von dem auf der Antriebsstange 11 vorgesehenen Anschlagnocken 33 gebildet wird, ist zu sehen. Die Arretiervorrichtung 32 selbst ist in Fig. 4 und 5 dargestellt. Sie weist neben dem Anschlagnocken 33 auf der Antriebsstange 11 noch ein am Gehäuse 10 befestigtes Gelenkkoppelgetriebe 34, bestehend aus zwei Schwenkhebeln 35,36, zwei Koppeln 37,38 und einem Gelenkzapfen 39, und einen Antrieb 40 zum Überführen des Gelenkzapfens 39 aus einer in Fig. 4 strichliniert dargestellten ersten Endposition in eine in Fig. 4 ausgezogen dargestellte zweite Endposition auf. Die zweiarmigen Schwenkhebel 35,36 sind auf räumlich feststehenden Zapfen 41,42 schwenkbar gelagert und an ihrem einen Hebelende an jeweils eine der beiden Koppeln 37,38 angelenkt. Die Koppeln 37,38 sind drehbar am Gelenkzapfen 39 gehalten. An ihrem freien Hebelende tragen die Schwenkhebel 35,36 einander zugekehrte Anlagebacken 43,44, die in der ersten Endposition des Gelenkzapfens (strichliniert dargestellt) einen die bidirektionale Verschiebung der Antriebsstange 11 ermöglichenden Abstand zum Anschlagnocken 33 einnehmen und sich in der zweiten Endposition des Gelenkzapfens (ausgezogen dargestellt) beidseitig an den Anschlagnocken 33 kraftschlüssig anlegen. Das Gelenkkoppelgetriebe 34 ist derart ausgebildet, daß in der zweiten Endposition des Gelenkzapfens 39 die beiden Koppeln 37,38 eine Totpunktlage einnehmen, in der eine über den Anschlagnocken 33 auf die Anlagebacken 43,44 ausgeübte Druckkraft über die Schwenkhebel 35,36 und Koppeln 37,38 eine Verschiebekraft am Gelenkzapfen 39 erzeugen, die in Richtung zweiter Endposition wirkt. Dadurch wird automatisch ein Öffnen der Arretiervorrichtung 32 unter einer von außen einwirkenden Kraft verhindert, so daß eine zusätzliche Verriegelung der Arretiervorrichtung 32 in der "Geschlossen-Stellung" entfallen kann.

Der Antrieb 40 des Gelenkzapfens 39 besteht aus einer Zugfeder 45, die an dem Gelenkzapfen 39 angreift und diesen in Richtung zweiter Endposition zu ziehen sucht, und aus einer Verriegelungseinheit 46, die den Gelenkzapfen 39 in der ersten Endposition hält und willkürlich und/oder im Störungsfall lösbar ist (Fig. 5). Sobald die Verriegelungseinheit 46 gelöst wird, zieht die Zugfeder 45 den Gelenkzapfen 39 in die zweite Endposition, in welcher die Anlagebacken 43,44 an dem Anschlagnocken 33 kraftschlüssig anliegen und die Antriebsstange 11 unmittelbar am Gehäuse 10 unverschieblich festlegen. Die Verriegelungseinheit 46 weist einen Elektromagneten 47 mit Magnettopf 48, Erregerspule 49 und Magnetanker 50 auf. Letzterer ist fest mit dem Gelenkzapfen 39 verbunden. Solange der Elektromagnet 47 erregt ist, wird der Magnetanker 50 in Anlage am Magnettopf 48 gegen die Zugkraft der Zugfeder 45 gehalten. Fällt die Magneterregung weg, ist das Gelenkkoppelgetriebe 34 zur freien Bewegung unter der Federkraft der Zugfeder 45 freigegeben. Je nach Verschiebestellung der Antriebsstange 11 bewirkt die Zugfeder 45 ein Anlegen des einen oder anderen Schwenkhebels 35 bzw. 36 mit Anlagebacken 43 bzw. 44 an dem Anschlagnocken 33. Wirkt nun eine äußere Kraft in Richtung der Mittellage auf die Antriebsstange 11, so folgt der kraftschlüssig anliegende Schwenkhebel 35 bzw. 36 infolge der Wirkung der Zugfeder 45 dieser Verschiebebewegung der Antriebsstange 11. In Nähe der Mittelstellung der Antriebsstange 11 werden die Koppeln 37,38 über die Totlage hinaus bewegt, bis sie an einem Anschlag 51 an den Schwenkhebeln 35,36 anliegen. Die Antriebsstange 11 wird damit in der Mittellage ihrer Verschiebebewegung festgehalten und gegen weitere Verschiebung blockiert. Im Störungsfall werden somit die Hinterräder in der Grundstellung gehalten und erfahren keine Schiefstellung zur Fahrtrichtung ("Hundegang").

Um das Bordnetz bei abgestelltem Fahrzeug zu entlasten, weist die Verriegelungseinheit 46 noch eine um eine räumlich feste Schwenkachse 52 schwenkbare Sperrklinke 53 mit Sperrhaken 54 und eine am Gelenkkoppelgetriebe 34, hier am Magnetanker 50, angeordnete Aussparung 55 auf, in welche der Sperrhaken 54 einzugreifen vermag. Die Sperrklinke 53 ist von einer Schenkelfeder 56 in Richtung Ausheben des Sperrhakens 54 aus der Aussparung 55 belastet. Ein zusätzlicher kleiner Elektromagnet 57 ist so angeordnet, daß er bei Erregung die Sperrklinke 53 entgegen der Kraft der Schenkelfeder 56 bis zum Eingreifen des Sperrhakens 54 in die Aussparung 55 zu schwenken vermag. Die Elektromagneten 47,57 sind an dem Fahrschalter des Fahrzeugs angeschlossen, wobei der Elektromagnet 57 bei Ausschalten des Fahrschalters (Zündung) kurzzeitig bestromt wird. Er zieht die Sperrklinke 53 an, wodurch der Sperrhaken 54 in die Aussparung 55 eingreift. Mit Öffnen des Fahrschalters wird der Elektromagnet 47 stromlos geschaltet. Das Gelenkkoppelgetriebe 34 bewegt sich unter der Federkraft der Zugfeder 45 soweit in Richtung zweiter Endposition des Gelenkzapfens 39, bis die Aussparung 55 den Sperrhaken 54 greift. Nun wird der kleine Elektromagnet 57 ebenfalls stromlos geschaltet. Damit der Sperrhaken 54 der Sperrklinke 53 sich nicht durch die Zugkraft der Zugfeder 45 aus der Aussparung 55 herausbewegt, liegen Sperrhaken 54 und Aussparung 55 mit Anlageschrägen 54a und 55a aufeinander, die entgegen der Zugrichtung der Zugfeder 45 ansteigen. Die Anhebeschrägen 54a und 55a sind in der vergrößerten Darstellung gemäß Fig. 6 zu sehen. Sperrhaken 54 und Aussparung 55 weisen damit einen sog. Negativwinkel $\alpha$ auf. Wird der Fahrschalter wieder geschlossen, so zieht der wieder erregte Elektromagnet 47 den Magnetanker 50 an, der Sperrhaken 54 wird von der Aussparung 55 freigegeben, und die Sperrklinke 53 schwenkt unter der Wirkung der Schenkelfeder 56, so daß der Sperrhaken 54 aus der Aussparung 55 heraustritt. Dadurch ist die Arretiervorrichtung 32 aktiviert. Im Störungsfall, z.B. bei Ausfall des Bordnetzes, fällt die Magneterregung des Elektromagneten 47 fort, und die Zugfeder 45 überführt dann das Gelenkkoppelgetriebe 34 in die in Fig. 4 ausgezogen dargestellte Arretierstellung der Antriebsstange 11.

Das Wiederaufziehen der Arretiervorrichtung 32 nach Systemausfall erfolgt werkstattseitig mittels eines am Gelenkzapfen 39 anzusetzenden Werkzeugs. Der Gelenkzapfen 39 wird dabei soweit gegen die Kraft der Zugfeder 45 verschoben, bis mit kurzzeitiger Erregung des kleinen Elektromagneten 57 der Sperrhaken 54 der Sperrklinke 53 in die Aussparung 55 einrastet und das Gelenkkoppelgetriebe 34 mechanisch verriegelt.

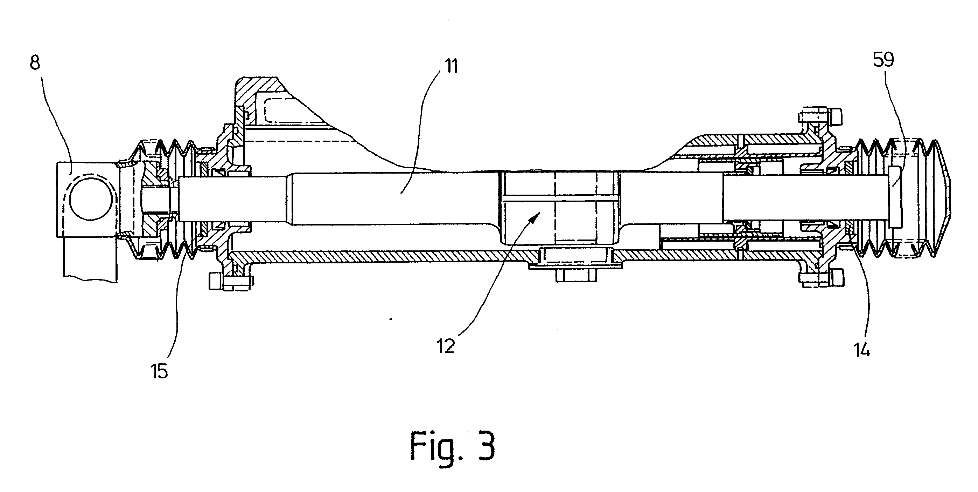

Die in Fig. 3 im Längsschnitt und ausschnittweise dargestellte Verstellvorrichtung für die Hinterräder eines Fahrzeugs unterscheidet sich von der in Fig. 1 und 2 beschriebenen Verstelleinrichtung nur dadurch, daß die Verschiebebewegung der Antriebsstange 11 nicht auf die Spurstangen 18,19 übertragen wird, sondern die Antriebsstange 11 einseitig auf einen Lenkschemel 58 wirkt, von dem aus dann der Lenkeinschlag der Hinterräder gesteuert wird. Am freien Ende der Antriebsstange 11 ist ein Anschlagflansch 59 angeordnet, der zusammen mit der Tellerfeder 14 den Verschiebeweg der Antriebsstange 11 in die eine Verschieberichtung begrenzt.

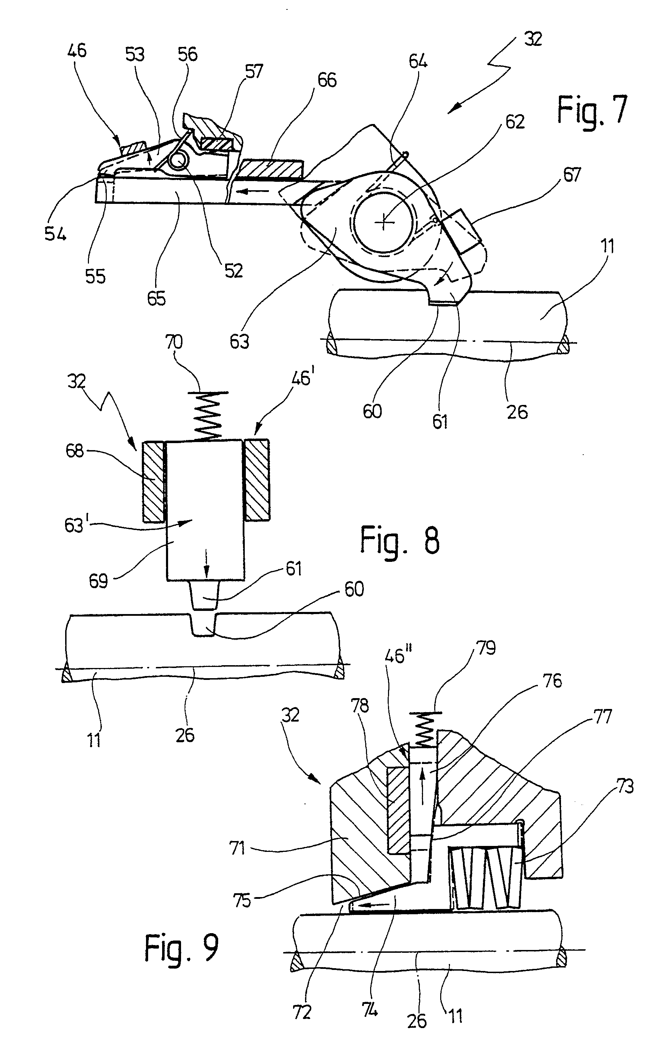

In Fig. 7 - 13 sind weitere Ausführungsbeispiele für mögliche Arretiervorrichtungen 32 im Längsschnitt und auszugsweise schematisch skizziert, wobei die Antriebsstange 11 bei den Arretiervorrichtungen 32 gemäß Fig. 7 und 8 formschlüssig und bei den Arretiervorrichtungen 32 gemäß 9 - 13 kraftschlüssig in der Verriegelungslage gehalten wird.

Bei den Arretiervorrichtungen 32 in Fig. 7 und 8 weist die Antriebsstange 11 eine Ausnehmung 60 auf, in die eine Sperrnase 61 formschlüssig einzugreifen vermag. Ausnehmung 60 und Sperrnase 61 sind dabei so angeordnet, daß ein Einfallen der Sperrnase 61 nur dann möglich ist, wenn die Antriebsstange 11 sich in ihrer Mittellage befindet, so daß bei Aktivierung der Arretiervorrichtung 32 ebenso wie bei der Arretiervorrichtung 32 gemäß Fig. 4 und 5 die Hinterräder des Fahrzeugs keine Schiefstellung zur Fahrtrichtung einnehmen.

Bei der Arretiervorrichtung 12 gemäß Fig. 7 ist die Sperrnase 61 an einem Sperrglied 63 angeordnet, das um eine am Gehäuse 10 festgelegte Schwenkachse 62 schwenkbar ist. Das Sperrglied 63 ist durch eine Schenkelfeder 64 in Richtung Einschwenken der Sperrnase 61 in die Ausnehmung 60 belastet. Im Betrieb wird das Sperrglied 63 durch eine Verriegelungseinheit 46', zu der ein Schiebestück 65 und ein Elektromagnet 66 gehört, in einer Entriegelungsstellung gehalten, in welcher die Sperrnase 61 außer Eingriff mit der Ausnehmung 60 ist. Bei Entregung des Elektromagneten 66 wird das Schiebestück 65 freigegeben und das Sperrglied 63 legt sich mit seiner Sperrnase 61 unter der Wirkung der Schenkelfeder 64 an die Antriebsstange 11 an. Verschiebt nun eine äußere Kraft die Antriebsstange 11 zu ihrer Mittelstellung hin, so rastet die Sperrnase 61 in die Ausnehmung 60 ein. Im eingefallenen Zustand wird das Sperrglied 63 durch eine federbelastete, seitlich einfallende Verriegelung 67 gesichert.

Zur Entlastung des Bordnetzes bei ausgeschaltetem Fahrschalter weist in gleicher Weise wie bei der Verriegelungseinheit 46 in Fig. 4 und 5 die Verriegelungseinheit 46' eine Sperrklinke 53 mit Sperrhaken 54 und einen kleinen Elektromagneten 57 auf. Die Sperrklinke 53 greift mit ihrem Sperrhaken 54 am freien Ende des Schiebestücks 65 in eine Aussparung 55 dessen und ist von einer Schenkelfeder 56 so belastet, daß der Sperrhaken 54 außerhalb des Verschiebewegs des Schiebestücks 65 liegt. Durch Erregen des kleinen Elektromagneten 57 wird die Sperrklinke 53 in gleicher Weise wie in Fig. 4 und 5 gegen die Kraft der Schenkelfeder 56 geschwenkt, bis der Sperrhaken 54 in die Aussparung 55 im Schiebestück 65 greift und dessen Verschiebung bei entregtem Elektromagneten 66 blockiert.

Das Lösen der Arretiervorrichtung 12 gemäß Fig. 7 erfolgt wiederum werkstattseitig mittels eines geeigneten Werkzeugs, mit welchem das Sperrglied 63 gegen die Schenkelfeder 64 und unter Verschieben des Schiebestücks 65 soweit verschwenkt wird, daß der Sperrhaken 54 der Sperrklinke 53 in die Aussparung 55 im Schiebestück 65 einfällt. Der kleine Elektromagnet 57 wird während des Aufziehens der Arretiervorrichtung 32 bestromt.

Bei der Arretiervorrichtung 32 gemäß Fig. 8 ist das die Sperrnase 61 tragende Sperrglied 63' quer zur Verschieberichtung der Antriebsstange 11 verschieblich geführt. Die Verriegelungseinheit 46' besteht aus einem Elektromagneten 68 mit Tauchanker 69 und Rückstellfeder 70 für den Tauchanker 69. Letzterer bildet das Sperrglied 63'. Im Betrieb der Verstellvorrichtung wird der Tauchanker 69 in der in Fig. 8 dargestellten Entriegelungsstellung von dem Elektromagneten 68 gegen die Kraft der Rückstellfeder 71 gehalten. Die Antriebsstange 11 ist zur freien Verschiebebewegung freigegeben. Mit Wegfall der Magneterregung legt sich die Sperrnase 61 unter der Wirkung der Rückstellfeder 70 an die Antriebsstange 11 an und rastet, wenn diese ihre Mittellage erreicht, in die Ausnehmung 60 ein. Das Lösen der Arretiervorrichtung 32 erfolgt bei entsprechend stark ausgelegtem Elektromagneten 68 durch Bestromung des Elektromagneten 68.

Die die Antriebsstange 11 bei Wirksamwerden kraftschlüssig haltenden Arretiervorrichtungen 32 gemäß Fig. 9 - 13 weisen alle einen an der Antriebsstange 11 angeordneten, räumlich feststehenden Anlaufkonus 71, der zusammen mit der Antriebsstange 11 einen Klemmspalt 72 begrenzt, einen in Achsrichtung der Antriebsstange 11 in den Klemmspalt 72 mittels einer Druckfeder 73 einschiebbaren Klemmkonus 74 zum kraftschlüssigen Anlegen an die Antriebsstange 11 und eine Verriegelungseinheit 46'' auf, die willkürlich und/oder im Störungsfall lösbar ist. Die Verriegelungseinheit 46'' hält bei passivierter Arretiervorrichtung 32 den Klemmkonus 74 im Klemmspalt 72 gegen die Kraft der Druckfeder 73 so arretiert, daß er sich weder an die Klemmkonusschräge 75 des Anlaufkonus 71 noch wesentlich an die Antriebsstange 11 anlegen kann. Zur Aktivierung der Arretiervorrichtung 32 wird die Verriegelungseinheit 46' gelöst und damit der Klemmkonus 74 durch die Druckfeder 73 in den Klemmspalt 72 hineingeschoben, wo er sich zwischen Klemmkonusschräge 75 und Antriebsstange 11 verkeilt und letztere kraftschlüssig hält. Damit wird im Störungsfall die Antriebsstange 11 in der momentanen Lenkposition der Hinterräder arretiert. Die Antriebsstangenposition ist sofort festgelegt und wird nicht erst bei Erreichen der Mittelstellung - wie dies bei den Arretiervorrichtungen 32 gemäß Fig. 4 - 8 der Fall ist -blockiert. Damit können in der Zeit zwischen Ausfall der Verstelleinrichtung und Arretierung der Antriebsstange 11 keine kritischen Fahrzustände auftreten.

Die Verriegelungseinheit 46'' in der Arretiervorrichtung 32 gemäß Fig. 9 umfaßt eine Fallklinke 76, die quer zur Verschieberichtung der Antriebsstange 11 verschieblich angeordnet ist und sich zwischen Anlaufkonus 71 und einem Bund 77 am Klemmkonus 74 abstützt. Die Fallklinke 76 bildet den Tauchanker eines Elektromagneten 78, der bei Erregung die Fallklinke 76 gegen die Kraft einer Rückstellfeder 79 einzieht, wobei die Fallklinke 76 die beschriebene Position mit Abstützung an Anlaufkonus 71 und Klemmkonus 74 einnimmt. Zum Lösen der Verriegelungseinheit 46″ wird der Elektromagnet 78 entregt und damit die Fallklinke 76 durch die Rückstellfeder 79 von dem Bund 77 des Klemmkonus 74 abgezogen. Damit ist der Klemmkonus 74 freigegeben und wird durch die Druckfeder 73 zur kraftschlüssigen Verkeilung der Antriebsstange 11 an dem Anlaufkonus 71 in den Klemmspalt 72 hineingedrückt. Das Wiederlösen der Arretiervorrichtung 32 erfolgt wiederum werkstattseitig mittels eines Werkzeugs, das direkt an der Stirnseite des Klemmkonus 74 ansetzt und diesen zurückschiebt. Mit Erregen des Elektromagneten 78 fällt die Fallklinke 76 wieder vor den Bund 77 des Klemmkonus 74 und hält diesen gegen die Kraft der Druckfeder 73.

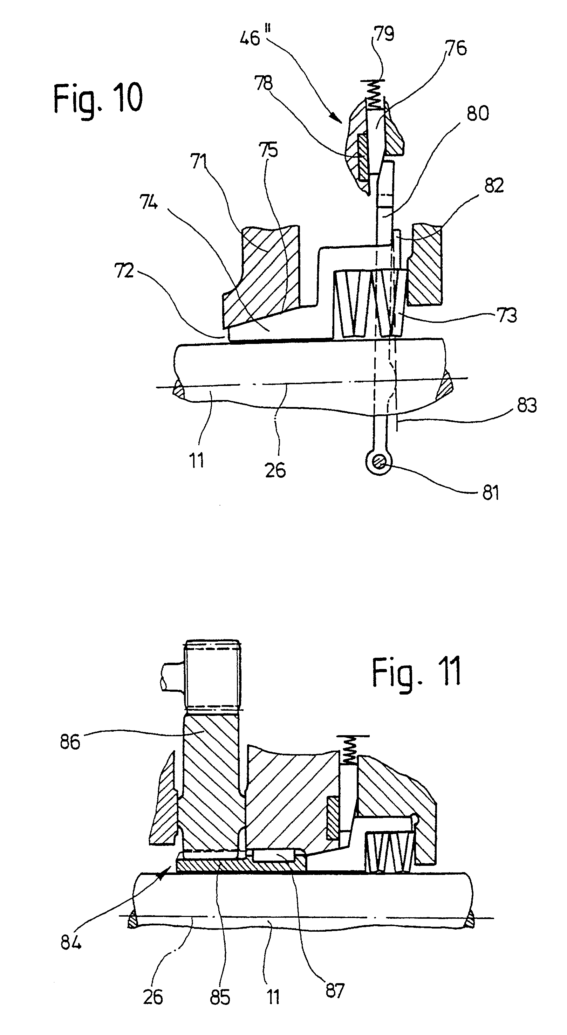

Bei der Arretiervorrichtung 32 gemäß Fig. 10 ist die Verriegelungseinheit 46″ aus dem Anlaufkonus 71 herausgenommen und wirkt über einen einarmigen Schwenkhebel 80 auf den Klemmkonus 74. Der Schwenkhebel 80 ist um eine quer zur Verschieberichtung der Antriebsstange 11 ausgerichtete Schwenkachse 81 schwenkbar gelagert und übergreift einen rückwärtigen Bund 82 am Klemmkonus 74. Mit seinem freien Hebelende liegt der Schwenkhebel 80 an der Fallklinke 76, die wiederum durch den Elektromagneten 78 gegen die Rückstellfeder 79 gehalten wird. Wird der Schwenkhebel 80 bei Erregen des Elektromagneten 78 von der Fallklinke 76 freigegeben, so bewegt sich der Klemmkonus 74 unter Mitnahme des Schwenkhebels 80 in den Klemmspalt 72 hinein. Zum Lösen der Arretiervorrichtung 32 wird der Schwenkhebel 80 in Fig. 10 im Uhrzeigersinn verschwenkt und anschließend die Fallklinke 76 durch Erregung des Elektromagneten 78 eingezogen. In dieser Stellung liegt der Schwenkhebel 80 an einem mit 83 strichliniert dargestellten raumfesten Anschlag an.

Bei den Arretiervorrichtungen 32 gemäß Fig. 11 - 13 sind automatische Rückstelleinheiten zum Rückführen des Klemmkonus 74 in dessen Außereingriffstellung mit Anlaufkonus 71 und Antriebsstange 11 vorgesehen.

Die Rückstelleinheit 84 in Fig. 11 umfaßt eine auf der Antriebsstange 11 axial verschiebbar geführte Gewindespindel 85, die stirnseitig an dem Stirnende des Klemmkonus 74 anliegt, ein mit der Gewindespindel 85 in Eingriff stehendes Getriebe 86, hier als mehrstufiges Stirnradgetriebe ausgebildet, und einen in das Getriebe 86 eintreibenden Elektromotor (hier nicht dargestellt). Die Drehmomentabstützung der mit einem Trapezgewinde versehenen Gewindespindel 85 erfolgt im Punkt 87 an dem Anlaufkonus 71. Zum Lösen der Arretiervorrichtung 32 wird der Elektromagnet eingeschaltet und die Gewindespindel 85 schiebt den Klemmkonus 74 unter Zusammendrücken der Druckfeder 73 in Richtung aus dem Klemmspalt 72 heraus, bis mit Erregen des Elektromagneten 78 die Fallklinke 76 sich vor den Bund 77 legt. Danach wird die Drehrichtung des Elektromotors umgeschaltet und die Gewindespindel 85 in ihre Ausgangsstellung zurückbewegt, so daß der Klemmkonus 74 zu ungehinderten Axialverschiebung frei ist. Im übrigen entspricht die Arretiervorrichtung 32 in Fig. 11 derjenigen in Fig. 9.

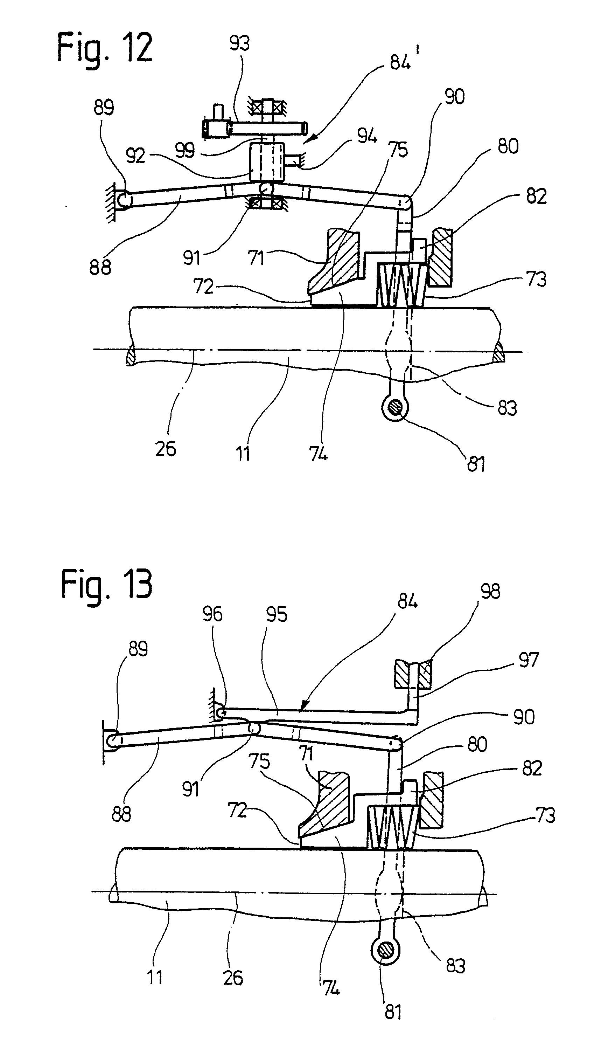

Die Rückstelleinheit 84′ bei der Arretiervorrichtung 32 in Fig. 12 greift hier an dem bereits in Fig. 10 beschriebenen Schwenkhebel 80 an, der seinerseits an der rückwärtigen Schulter 82 des Klemmkonus 74 anliegt und eine Verschiebung des Klemmkonus 74 gegen die Kraft der Druckfeder 73 ermöglicht. Die Rückstelleinheit 84′ hat einen Kniehebel 88, der an einem Hebelende im Punkt 89 ortsfest und quer zur Verschieberichtung der Antriebsstange 11 gelagert ist und an seinem anderen Hebelende im Punkt 90 an dem Schwenkhebel 80 angelenkt ist. Mit dem Kniegelenk 91 liegt der Kniehebel 88 an einer Spindelmutter 92 an, die auf einer elektromotorisch, hier über ein Stirnradgetriebe 93, angetriebenen Spindel 99 verschraubbar ist. Die Drehmomentabstützung der Spindelmutter 92 erfolgt im Punkt 94. Die kraftschlüssige Anlage des Kniegelenks 91 an der Spindelmutter 92 wird durch die Druckfeder 73 bewirkt, die über die Schulter 82 des Klemmkonus 74 und den Schwenkhebel 80 auf den Kniehebel 88 wirkt. Die Verriegelungseinheit 46″, die hier der Übersichtlichkeit halber nicht dargestellt ist, ist zwischen Kniegelenk 91 des Kniehebels 88 und der Spindelmutter 92 angeordnet, wobei die Fallklinke sich zwischen Spindelmutter 92 und Kniegelenk 91 abstützt. Damit ist das Kniegelenk 91 von der Spindelmutter 92 getrennt und ist nach Herausziehen der Fallklinke zur Bewegung in Richtung Spindelmutter 92 frei, wodurch das tiefere Hineingleiten des Klemmkonus 74 in den Klemmspalt 72 hinein ermöglicht wird.

Bei der Rückstelleinheit 84″ in Fig. 13 ist der elektromotorische Antrieb des Kniehebels 88 durch einen elektromagnetischen Hubantrieb ersetzt. Der Kniehebel 88 liegt mit seinem Kniegelenk 91 an einem einarmigen Schwenkhebel 95 an, dessen ortsfeste Schwenkachse 96 quer zur Verschieberichtung der Antriebsstange 11 ausgerichtet ist. Das freie Ende des Schwenkhebels 95 wird über den Kniehebel 88 stirnseitig an den Tauchanker 97 eines Elektromagneten 98 angepreßt. Bei erregtem Elektromagneten 98 wird der Schwenkhebel 95 in der in Fig. 13 dargestellten Stellung gehalten, in welcher er den Kniehebel 88 nach unten drückt und dadurch über den Schwenkhebel 80 den Klemmkonus 74 in Außereingriff mit Klemmkonusschräge 75 des Anlaufkonus 71 und Antriebsstange 11 hält. Fällt die Erregung des Elektromagneten 98 weg, so wird der Tauchanker 97 durch eine nicht dargestellte Rückstellfeder in Fig. 13 nach oben bewegt und der Kniehebel 88 ist zur freien Schwenkbewegung freigegeben, wobei dessen Kniegelenk 91 in Fig. 13 nach oben auswandert. Dadurch ist auch der Schwenkhebel 80 freigegeben und der Klemmkonus 74 kann tiefer in den Klemmspalt 72 eindringen. Die hier ebenfalls nicht dargestellte Verriegelungseinheit 46″ ist zwischen Kniegelenk 91 und Schwenkhebel 95 angeordnet, wobei sich das Kniegelenk 91 über die Fallklinke an dem Schwenkhebel 95 abstützt.

**Ansprüche**

1. Elektromotorische Verstellvorrichtung, insbeson-dere zum Verstellen der Hinterräder eines Kraftfahrzeugs, dadurch gekennzeichnet, daß zwischen Elektromotor (13) und Verstellorgan, insbe- sondere Hinterräder, ein Geradschubkurbeltrieb (12) mit einer vom Elektromotor (13) angetriebenen Kurbel (22), einer axial verschiebbaren, auf das Verstellorgan mittel- oder unmittelbar einwirkenden Antriebsstange (11) und einem an Kurbel (22) und Antriebsstange (11) angelenkten Pleuel (20) angordnet ist, daß der Gelenkpunkt (24) zwischen Pleuel (20) und Antriebsstange (11) in der Längsachse (26) der Antriebsstange (11) und der Drehpunkt (21) der Kurbel (22) im Querabstand von der Längsachse (26) liegt, daß zur Verschiebung der Antriebsstange (11) nur derjenige Drehbereich der Kurbel (22) genutzt wird, in dem der Gelenkpunkt (25) zwischen Pleuel (20) und Kurbel (22) auf der von dem Kurbeldrehpunkt (21) abgekehrten Seite der Längsachse (26) liegt, und daß zwischen Elektromotor (13) und Kurbel (22) ein vorzugsweise mehrstufiges Untersetzungsgetriebe (30) eingeschaltet ist.

2. Vorrichtung nach Anspruch 1, dadurch gekennzeichnet, daß das Untersetzungsgetriebe (30) keine Selbsthemmung aufweist und daß eine an der Antriebsstange (11) angreifende Arretiervorrichtung (32) vorgesehen ist, die willkürlich und/oder im Störungsfall auslösbar ist und die Abtriebsstange (11) blockiert.

3. Vorrichtung nach Anspruch 2, dadurch gekennzeichnet, daß die Arretiervorrichtung (32) einen auf der Antriebsstange (11), vorzugsweise in der Mitte ihres Verschiebewegs, angeordneten Anschlagnok-ken (33), ein räumlich fest angeordnetes Gelenkkoppelgetriebe (34) mit zwei zweiarmigen Schwenkhebeln (35,36), zwei an jeweils einem Hebelende der Schwenkhebel (35,36) angelenkten Koppeln (37,38) und einem axial verschiebbaren Gelenkzapfen (39), an dem die Koppeln (37,38) drehbar gehalten sind, und einen am Gelenkzapfen (39) zu dessen Verschiebung aus einer ersten in eine zweite Endposition angreifenden Antrieb (40) aufweist und daß die Schwenkhebel (35,36) an ihrem freien Ende auf einander zugekehrten Seiten Anlagebacken (43,44) tragen, die in der Endposition des Gelenkzapfens (39) einen die bidirektionale Verschiebung der Antriebsstange (11) ermöglichenden Abstand zum Anschlagnocken (33) einhalten und in der zweiten Endposition des Gelenkzapfens (39) beidseitig am Anschlagnocken (33) anliegen.

4. Vorrichtung nach Anspruch 3, dadurch gekennzeichnet, daß das Gelenkkoppelgetriebe (34) derart ausgebildet ist, daß in der zweiten Endposition des Gelenkzapfens (39) mit Anlage der Anlagebacken (43,44) am Anschlagnocken (33) die beiden Koppeln (37,38) eine Totpunktlage einnehmen, in der eine über den Anschlagnocken (33) auf die Anlagebacken (43,44) ausgeübte Druckkraft eine in Richtung in die zweite Endposition wirkende Verschiebekraft am Gelenkzapfen (39) erzeugt.

5. Vorrichtung nach Anspruch 3 oder 4, dadurch gekennzeichnet, daß der Antrieb (40) für den Gelenkzapfen (39) eine Feder (45) mit in die zweite Endposition des Gelenkzapfens (39) gerichteter Federkraft und ein den Gelenkzapfen (39) in der ersten Endposition haltende Verriegelungseinheit (46) aufweist, die willkürlich und/oder im Störungsfall lösbar ist.

6. Vorrichtung nach Anspruch 5, dadurch gekennzeichnet, daß die Verriegelungseinheit (46) einen Elektromagneten (47) mit Magnettopf (48), Erregerspule (49) und Magnetanker (50) aufweist, dessen Magnettopf (48) und Erregerspule (49) räumlich fest angeordnet und dessen Magnetanker (50) mit dem Gelenkzapfen (39) fest verbunden ist.

7. Vorrichtung nach Anspruch 2, dadurch gekennzeichnet, daß die Arretiervorrichtung (32) eine in der Antriebsstange (11), vorzugsweise in der Mitte des Verschiebewegs, angeordnete Ausnehmung (60), eine in die Ausnehmung (60) formschlüssig einrastbare Sperrnase (61), die auf einem in Eingriffsrichtung federbelasteten Sperrglied (63;63′) angeordnet, ist und eine das Sperrglied (63;63′) in Außereingriffstellung von Sperrnase (61) und Ausnehmung (60) haltende Verriegelungseinheit (46′) aufweist, die willkürlich und/oder im Störfall lösbar ist.

8. Vorrichtung nach Anspruch 7, dadurch gekennzeichnet, daß das Sperrglied (63) um eine räumlich feststehende Schwenkachse (62) schwenkbar angeordnet ist und die Verriegelungseinheit (46) ein elektromagnetisch betätigtes Schiebestück (65) aufweist, das bei erregtem Elektromagneten (66) das Sperrglied (63) entgegen dessen Federbelastung in Außereingriffstellung von Sperrnase (61) und Ausnehmung (60) hält.

9. Vorrichtung nach einem der Ansprüche 5 - 8, dadurch gekennzeichnet, daß die Verriegelungseinheit (46;46′) eine um eine räumlich feste Schwenkachse (52) schwenkbare Sperrklinke (53) mit Sperrhaken (54) und einen am Gelenkkoppelgetriebe (34) bzw. an dem Schiebestück (65) angeordnete Aussparung (55) zum Eingreifen des Sperrhakens (54) aufweist, daß die Sperrklinke (53) in Richtung Ausheben des Sperrhakens (54) aus der Aussparung (55) federbelastet ist und daß ein kurzzeitig erregbarer zweiter Elektromagnet (57) vorgesehen ist, der bei Erregung die Sperrklinke (53) gegen die Federkraft bis zum Eingreifen des Sperrhakens (54) in die Ausnehmung (55) schwenkt.

10. Vorrichtung nach Anspruch 9, dadurch gekennzeichnet, daß Sperrhaken (54) und Aussparung (55) in ihrer Eingriffstellung mit Anlageschrägen (54a,55a) aufeinanderliegen, die entgegen der Verschieberichtung des Gelenkzapfens (39) in die zweite Endposition bzw. entgegen der Verschieberichtung des Schiebestücks (65) zur Freigabe des Sperrglieds (63) ansteigen.

11. Vorrichtung nach Anspruch 9 oder 10, dadurch gekennzeichnet, daß der erste Elektromagnet (66) an dem Fahrschalter eines Kraftfahrzeugs angeschlossen ist und der zweite Elektromagnet (57) mit Öffnen des Fahrschalters kurzzeitig eingeschaltet wird.

12. Vorrichtung nach Anspruch 7, dadurch gekennzeichnet, daß das Sperrglied (63′) zur Längsachse (26) der Antriebsstange (11) axial verschieblich geführt ist und daß die Verriegelungseinheit (46′) einen Elektromagneten (68) mit einem vom Sperrglied (63′) gebildeten Tauchanker aufweist, der bei Erregung den Tauchanker in Außereingriffstellung von Sperrnase (61) und Ausnehmung (60) hält.

13. Vorrichtung nach Anspruch 2, dadurch gekennzeichnet, daß die Arretiervorrichtung (32) einen unter Belassung eines Klemmspalts (72) an der Antriebsstange (11) angeordneten, räumlich feststehenden Anlaufkonus (71), einen in Achsrichtung der Antriebsstange (11) in den Klemmspalt (72) mittels einer Verschiebefeder (73) einschiebbaren Klemmkonus (74) zum kraftschlüssigen Anlegen an die Antriebsstange (11) und eine den Klemmkonus (74) in Außereingriffstellung mit Anlaufkonus (71) und Antriebsstange (11) haltende Verriegelungseinheit (46″) aufweist, die willkürlich und/oder im Störungsfall lösbar ist.

14. Vorrichtung nach Anspruch 13, dadurch gekennzeichnet, daß die Verriegelungseinheit (46″) eine quer zur Verschieberichtung des Klemmkonus (74) verschieblich angeordnete Fallklinke (76), die sich zwischen Anlaufkonus (71) und einem Bund (77) des Klemmkonus (74) abstützt, einen Elektromagneten (78), der bei Erregung die Fallklinke (76) in Eingriff mit Bund (77) und Anlaufkonus (71) hält, und eine an der Fallklinke (76) angreifende Feder (79) zum Außereingriffbringen der Fallklinke (76) mit dem Bund (77) bei entregtem Elektromagneten (78) aufweist.

15. Vorrichtung nach Anspruch 13, dadurch gekennzeichnet, daß die Verriegelungseinheit (46″) eine quer zur Verschieberichtung des Klemmkonus (74) angeordnete, axial verschieblich geführte Fallklinke (76), einen in Verschieberichtung des Klemmkonus (74) schwenkbaren Ausrückhebel (80), der an einer quer zur Klemmkonusverschieberichtung sich erstreckenden Schulter (82) des Klemmkonus (74) und mit seinem Hebelende an der Fallklinke (76) anliegt, einen Elektromagneten (78), der bei Erregung die Fallklinke (76) in Eingriff mit dem Ausrückhebel (80) bringt und eine an der Fallklinke (76) angreifende Feder (79) zum Abziehen der Fallklinke (76) vom Ausrückhebel (80) bei stromlosem Elektromagneten (78) aufweist.

16. Vorrichtung nach einem der Ansprüche 13 - 15, gekennzeichnet durch eine Rückstelleinheit (84;84′;84″) zum Rückführen des Klemmkonus (74) in seine Außereingriffstellung mit Anlaufkonus (71) und Antriebsstange (11), in welcher die Verriegelungseinheit (46″) aktivierbar ist.

17. Vorrichtung nach Anspruch 16, dadurch gekennzeichnet, daß die Rückstelleinheit (84) eine auf der Antriebsstange (11) axial verschiebbar geführte, an dem Stirnende des Klemmkonus (74) anliegende Gewindespindel (85), ein mit der Gewindespindel (85) in Eingriff stehendes Getriebe (86) und einen in das Getriebe (86) eintreibenden Elektromotor aufweist.

18. Vorrichtung nach Anspruch 16, dadurch gekennzeichnet, daß die Rückstelleinheit (84) einen in Verschieberichtung des Klemmkonus (74) schwenkbaren Rückstellhebel (80), der an einem quer zur Verschieberichtung des Klemmkonus (74) sich erstreckenden Bund (82) anliegt, und einen am Hebelende angelenkten Kniehebel (88) aufweist, der am anderen Ende schwenkbar gelagert ist und dessen Kniegelenk (91) in Schwenkrichtung des Kniehebels (88) motorisch verschiebbar ist.

19. Vorrichtung nach Anspruch 18, dadurch gekennzeichnet, daß der Kniehebel (88) mit seinem Kniegelenk (91) unter der Federkraft der Verschiebefeder (73) des Klemmkonus (74) an einer Spindelmutter (72) anliegt, die auf einer elektromotorisch angetriebenen Spindel (99) verschraubbar und axial verschieblich geführt ist.

20. Vorrichtung nach Anspruch 18, dadurch gekennzeichnet, daß der Kniehebel (88) mit seinem Kniegelenk (91) unter der Federkraft der Verschiebefeder (73) des Klemmkonus (74) an einem Schwenkhebel (95) anliegt, der mit seinem Hebelende an einem Anker (97) eines Elektromagneten (98) anliegt, und daß der Elektromagnet (98) bei Erregung den Schwenkhebel (95) gegen die Kraft der Verschiebefeder (73) in Streckrichtung des Kniehebels (88) verschwenkt.

21. Vorrichtung nach Anspruch 19 oder 20, dadurch gekennzeichnet, daß die Verriegelungseinheit (46″) zwischen Kniegelenk (91) des Kniehebels (88) und Spindelmutter (92) bzw. Schwenkhebel (95) angeordnet ist.

Fig. 1

Fig. 2

Fig. 3

11

Fig. 4

Fig. 5

Fig. 6

13

Fig. 7

Fig. 8

Fig. 9

Fig. 10

Fig. 11

# Fig. 12

# Fig. 13

# EUROPÄISCHER
# RECHERCHENBERICHT

Nummer der Anmeldung

**EP 90 11 7445**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 173 460 (HONDA)<br>* Ansprüche; Figuren * | 1 | B 62 D 7/15 |
| A | EP-A-0 225 773 (GROUP LOTUS)<br>* Ansprüche; Figuren * | 2 | |
| A | PATENT ABSTRACTS OF JAPAN, Band 13, Nr. 320 (M-853)[3668], 20. Juli 1989;<br>& JP-A-1 106 777 (ISUZU) 24-04-1989 | 1,2 | |
| A | DE-A-3 543 009 (JORDAN ELEKTROMOTOREN)<br>* Das ganze Dokument * | 1 | |

| RECHERCHIERTE SACHGEBIETE (Int. Cl.5) |
|---|
| B 62 D<br>F 16 H |

Der vorliegende Recherchenbericht wurde für alle Patentansprüche erstellt

| Recherchenort | Abschlußdatum der Recherche | Prüfer |
|---|---|---|
| Den Haag | 21 Januar 91 | PIRIOU J.C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument